# EUROPÄISCHE PATENTSCHRIFT

(11) **EP 4 144 493 B1**
(45) Veröffentlichungstag und Bekanntmachung des Hinweises auf die Patenterteilung: **03.12.2025**
(21) Anmeldenummer: 21202453.3
(22) Anmeldetag: 13.10.2021
(51) Int. Cl.: B25J 19/02, B25J 21/02, G06F 3/01, B23Q 17/00, B01L 1/04

(54) **ISOLATORVORRICHTUNG SOWIE VERFAHREN ZUR ÜBERWACHUNG**
INSULATOR DEVICE AND METHOD OF MONITORING
DISPOSITIF ISOLATEUR, AINSI QUE PROCÉDÉ DE SURVEILLANCE

(30) Priorität: 02.09.2021 DE 102021122772
(43) Veröffentlichungstag der Anmeldung: 08.03.2023
(73) Patentinhaber: OPTIMA pharma containment GmbH, 78315 Radolfzell (DE)
(72) Erfinder: KASSNER, Thomas, 78315 Radolfzell (DE); HEUER, Christian, 6043 Adligenswill (CH)
(74) Vertreter: Patent- und Rechtsanwälte Behrmann Wagner PartG mbB

(56) Entgegenhaltungen:
- EP-A1- 3 771 525
- EP-A1- 3 815 856
- WO-A1-2016/147061
- US-B2- 9 589 689

## Beschreibung

Die vorliegende Erfindung betrifft eine Isolatorvorrichtung, insbesondere für pharmazeutische und/oder biotechnische Anwendungen, nach dem Oberbegriff des Anspruchs 1, sowie ein Verfahren zur Überwachung der Isolatorvorrichtung nach dem Anspruch 9.

Die EP 2 535 650 B1 zeigt eine Isolatorvorrichtung, insbesondere eine Dekontaminationsanordnung für pharmatechnische Anwendungen, umfassend einen zu dekontaminierenden Raum, insbesondere einen Isolatorraum, sowie eine Reinigungseinrichtung zum Entziehen von gasund/oder dampfförmigen Dekontaminationsmitteln aus der Raumluft, insbesondere Wasserstoffperoxid. Bei dem zu dekontaminierenden Raum handelt es sich um einen biotechnischen oder pharmatechnischen Manipulationsraum, in den über fest mit dem Raum verbundene Arbeitshandschuhe eingegriffen werden kann. Dabei sind die Arbeitshandschuhe, vorzugsweise auswechselbar, an seitlichen Öffnungen des Manipulationsraums abdichtend fixiert. Bevorzugt zusätzlich weist die Isolatorvorrichtung einen Handhabungsraum für Pharmazeutika und/oder einen Abfüllraum mit einer Abfülleinrichtung auf, die innerhalb des oder angrenzend an den Manipulationsraum/s angeordnet sind.

Die EP 3 771 525 A1 offenbart ebenfalls eine Isolatorvorrichtung mit einem Manipulationsraum und in den Manipulationsraum einsetzbare Arbeitshandschuhe, insbesondere Ärmelhandschuhe, wobei die Arbeitshandschuhe eine Eingriffsvorrichtung aufweisen mittels der die Arbeitshandschuhe in einer Eingriffsöffnung des Manipulationsraums einsetzbar sind. Zur Detektion oder zur Registrierung einer eingesetzten Eingriffsvorrichtung mit Arbeitshandschuhen in die Isolatorvorrichtung, weist die Eingriffsvorrichtung Sensormittel, insbesondere RFID Tags, auf.

Alternativ zu der Anordnung der Sensormittel in der Eingriffsvorrichtung, kann ein RFID Tag auch an einem Arbeitshandschuh zur Leckageprüfung angeordnet sein.

Die Sensormittel sind also unmittelbar mit der Eingriffsvorrichtung der Arbeitshandschuhe verbunden, weshalb zur Detektion und Registrierung eine Art Spezialvorrichtung oder Spezialhandschuhe, insbesondere mit einer speziellen Kopplung zu einer Erfassungseinheit, erforderlich sind. Bei einem versehentlichen Einsatz von Arbeitshandschuhen mit einer Standardvorrichtung ohne Sensormittel kann es also zu einer nicht autorisierten Bedienung des Manipulationsraums kommen. Des Weiteren ist die Isolatorvorrichtung nurmehr mit diesen Spezialvorrichtungen bedienbar.

Außerdem sind Sensormittel, die an der Eingriffsvorrichtung oder den Arbeitshandschuhen selbst festgelegt sind, nicht dazu geeignet eine Bewegung des Arbeitshandschuhs zu erfassen. Deshalb kann zum Beispiel auch ein Eingriff in einen Sperrbereich nicht erfasst werden, in dem Gefahrgut gelagert ist und/oder automatisierte Prozesse, insbesondere zur Dekontamination, ausgeführt werden. Ein versehentlicher und nicht überwachter Eingriff in einem solchen Sperrbereich könnte zu einer Verletzung einer Bedienperson führen.

Die EP 3 815 856 A1 zeigt eine Anordnung zur Überwachung von Zustand und Bewegungsablauf in einer aseptischen Arbeitskammer. In die Arbeitskammer ragt zumindest ein Arbeitshandschuh hinein, wobei der jeweilige Arbeitshandschuh in der Arbeitskammer bis zu einem maximalen Greifbereich in den drei Raumachsen erstreckbar ist. Die Anordnung umfasst ein Tracking-System, deren Aufzeichnungen den zumindest einen Arbeitshandschuh lokalisieren kann. In einzelnen Flächenabschnitten um Maschinen herum kann ein Sperrbereich eingerichtet sein. In den Sperrbereich mit dem zumindest einen Arbeitshandschuh darf nicht eingegriffen werden.

Die US 9 589 689 B2 zeigt eine Installation bestehend aus: mindestens einer isolierten Handschuhbox; mindestens einen Handschuhanschluss mit einem Ring, der fest mit einer Wand der Handschuhbox verbunden ist, wobei der Ring mit einem ersten Radiofrequenz-Identifikationschip versehen ist und wobei der RFID-Chip Informationen über den Ring enthält; mindestens zwei Handschuhe, darunter ein neuer Handschuh und ein gebrauchter Handschuh, die jeweils mit einem RFID-Chip versehen sind; eine Vorrichtung zum Wechseln von Handschuhen und einem RFID Lesegerät. Der neue Handschuh ist so konfiguriert, dass er zum Zwecke des Austauschs des gebrauchten Handschuhs in die Handschuhwechselvorrichtung eingesetzt werden kann.

Die WO 2016/147061 A1 zeigt ein tragbares Dekontaminationsgerät zur Durchführung kontaminationsverursachender Arbeiten an einem Objekt, bestehend aus: einem starren Rahmen mit einer Objektaufnahmeöffnung; mindestens eine verschließbare Materialöffnung, die zu einem Arbeitsraum führt und zum hermetischen Anschluss einer Materialverpackung bestimmt ist; einen Lufteinlass und mindestens einen Luftabsauganschluss für den Arbeitsraum; mindestens zwei Handhabungsräume, die zum Arbeitsraum führen und für den hermetischen Anschluss luftdichter Handschuhe ausgelegt sind, um Arbeiten im Arbeitsraum durchzuführen.

Der vorliegenden Offenbarung liegt die Aufgabe zugrunde, eine Isolatorvorrichtung vorzuschlagen, die bei Vermeidung der aus dem Stand der Technik bekannten Probleme eine Überwachung und/oder einen Eingriff, insbesondere zur Verbesserung einer Bediensicherheit, unabhängig von der Wahl eines Arbeitshandschuhs oder dessen Eingriffsvorrichtung detektieren kann.

Ferner besteht die Aufgabe darin, ein Verfahren zur Überwachung der Isolatorvorrichtung anzugeben.

Diese Aufgabe wird hinsichtlich der Isolatorvorrichtung mit den Merkmalen des unabhängigen Anspruchs 1 und hinsichtlich des Verfahrens mit den Merkmalen des Anspruchs 9 gelöst.

Vorteilhafte Ausführungsformen sind Gegenstand der Unteransprüche.

Erfindungsgemäß wird eine Isolatorvorrichtung, insbesondere für pharmazeutische und/oder biotechnische Anwendungen, vorgeschlagen, die einen Manipulationsraum, zumindest einen in den Manipulationsraum einsetzbaren Arbeitshandschuh und Sensormittel zur Erfassung eines eingesetzten Zustandes des zumindest einen Arbeitshandschuhs aufweist, wobei der zumindest eine Arbeitshandschuh in einer Eingriffsöffnung des Manipulationsraums auswechselbar einsetzbar ist und im eingesetzten Zustand die Isolatorvorrichtung abdichtet. Dabei sind die Sensormittel beabstandet zu der Eingriffsöffnung in dem Manipulationsraum angeordnet und mit einer Erfassungseinheit verbunden, wobei ein Erfassungsbereich der Sensormittel, insbesondere bildgebende Sensormittel, wenigstens einen Arbeitsbereich des zumindest einen Arbeitshandschuhs im Bereich der Eingriffsöffnung, insbesondere einen Querschnitt mit Durchmesser der Eingriffsöffnung, umfasst, um zumindest ein Auswechseln und/oder eine Bedienung des zumindest einen Arbeitshandschuhs in dem Manipulationsraum zu detektieren und mittels der Erfassungseinheit auszuwerten.

Unter der Isolatorvorrichtung wird im Rahmen der Erfindung vorzugsweise eine Dekontaminationsanordnung verstanden, in der durch Einleitung von bestimmten Fluiden eine definierte Umgebungsbedingung, ähnlich einem Reinraum, aufgebaut werden kann, wobei dazu die Isolatorvorrichtung, insbesondere der Manipulationsraum, von Umwelteinflüssen abgedichtet ist. Um dennoch der Bedienperson einen Eingriff in den Manipulationsraum zu ermöglichen, sind Arbeitshandschuhe, insbesondere in der Form von Ärmelhandschuhen, bevorzugt an einer Isolatorwand des Manipulationsraums, insbesondere der Eingriffsöffnung, festgelegt. Vorzugsweise ist die Eingriffsöffnung elliptisch ausgebildet, in der die Arbeitshandschuhe abdichtend einsetzbar sind.

Als Arbeitsbereich wird vorzugsweise ein Raumabschnitt des Manipulationsraums angrenzend an die Arbeitshandschuhe verstanden, in dem eine Bedienperson eine mögliche Arbeitsbewegung ausführen kann. In diesem Zusammenhang wird der Erfassungsbereich vorzugsweise als ein zweidimensionales oder räumliches Sichtfenster der Sensormittel um den Arbeitsbereich verstanden, wobei dieses Sichtfenster vorzugsweise softwaretechnisch begrenzt ist und eine Art Bewegungszone ausbildet, in der Arbeitsbewegungen erfasst werden können. In dem Erfassungsbereich ist bevorzugt zumindest ein Durchmesser der Eingriffsöffnung und damit auch ein Arbeitshandschuh in dessen vollem Durchmesser oder Breite erfassbar. Dadurch kann vorzugsweise ein Auswechseln, insbesondere ein Einsetzen oder Herausnehmen des zumindest einen Arbeitshandschuhs, und/oder eine Bedienung des Arbeitshandschuhs, insbesondere eine Handhabung für einen Produktionsprozess, erfasst werden.

Alternativ kann der Erfassungsbereich auch nur einen Teilbereich des zumindest einen Arbeitshandschuhs umfassen, insbesondere einen Handbereich des zumindest einen Arbeitshandschuhs, um vorzugsweise eine Bedienung des Arbeitshandschuhs zu erfassen.

Dabei hat die Erfindung überraschenderweise erkannt, dass durch eine von der Eingriffsöffnung beabstandeten Anordnung der Sensormittel in dem Manipulationsraum der zumindest eine Arbeitshandschuh unabhängig von dessen Ausgestaltung oder Festlegung, insbesondere mittels einer Eingriffsvorrichtung, detektiert werden kann. Insbesondere kann ein Auswechseln des Arbeitshandschuhs registriert werden und/oder ein Eingriff in den Manipulationsraum durch die Bedienperson detektiert werden. Dabei sind vorteilhafterweise keine Markierungen oder Sendermittel-Hardware an dem Arbeitshandschuh, insbesondere Spezialhandschuhe, selbst erforderlich. Die erfindungsgemäßen Sensormittel erlauben vielmehr eine kontaktlose und beabstandete Überwachung eines Eingriffs in den Manipulationsraum. Beispielhaft kann eine Handschuhgröße oder Form erfasst und registriert, vorzugsweise abgespeichert, werden. Weiter können aus Eingriffserfassungs-Daten Historiendaten der Isolatorrvorrichtung erstellt werden.

Besonders vorteilhaft können die Sensormittel und die Erfassungseinheit mit einer Anlagensteuerung zusammenwirken, um insbesondere eine sichere Bedienung der Isolatorrvorrichtung zu ermöglichen. So kann vorzugsweise ein Dekontaminations- oder Reinigungsprozesses nurmehr durchgeführt werden, sobald ein Arbeitshandschuh eingesetzt ist und/oder keine Bedienung des Arbeitshandschuhs detektiert wird.

Vorzugsweise handelt es sich bei den Sensormitteln um bildgebende Sensormittel, wobei es sich um optische Sensormittel, insbesondere optische Kameras, oder bildgebende Sensormittel, die insbesondere auf Licht-, Laser-, Ultraschall- oder Radarstrahlung aufbauen, handeln kann. Dabei unterscheiden sich die bildgebenden Sensormittel bevorzugt von einfachen Lichtschranken derart, dass zumindest eine zweidimensionale Erfassung eines Objekts, insbesondere des zumindest einen Arbeitshandschuhs, im Bereich der Eingriffsöffnung möglich ist.

Weiter bevorzugt weist die Erfassungseinheit Filtermittel, bevorzugt analoge und/oder digitale Filtermittel, insbesondere computer- oder softwarebasiert, auf, die dazu ausgebildet sind den Erfassungsbereich zu begrenzen und/oder einen Schwellwert zur Bewegungsdetektion einzustellen. Vorzugsweise kann mit den Filtermitteln, vorzugsweise als Art softwarebasierte Begrenzungsmittel, der Erfassungsbereich als ein räumliches Sichtfenster der Sensormittel aus erfassten Sensor-Daten softwaretechnisch begrenzt werden, um eine Art Bewegungszone oder einen Bereich von Interesse auszubilden, in der bevorzugt Bedienbewegungen erfassbar sind. Dadurch können bewegte Objekte außerhalb des Bereichs von Interesse ausgeblendet und durch softwaretechnische Filterung von der Detektion ausgeschlossen werden. Weiter können mit den Filtermitteln insbesondere passiv bewegte Hintergrundobjekte, insbesondere in der Isolatorvorrichtung aufgehängte Objekte mit periodischer Bewegung, außerhalb des Erfassungsbereichs herausgefiltert werden.

Als Schwellwert zur Bewegungsdetektion kann vorzugsweise eine Mindestbewegungsgeschwindigkeit und/oder eine Mindestbewegungsauslenkung und/oder eine Abweichung von einem Bewegungsmuster verstanden werden. Insbesondere nicht betätigte Arbeitshandschuhe und/oder Hintergrundobjekte im Erfassungsbereich können auch durch Schwingungen und/oder Fluidströmungen innerhalb der Isolatorrvorichtung in eine passive Bewegung, insbesondere in eine periodische Bewegung, versetzt werden. Eine solche Hintergrund-Bewegung oder Schwingung kann als ein Bewegungsmuster mit einem bestimmten passiven Frequenzspektrum oder Wiederholrate verstanden werden, wobei eine aktive Bedienung des Arbeitshandschuhs zu einer Abweichung von dem passiven Frequenzspektrum führt und eine Detektion auslösen kann. Zusätzlich oder alternativ kann eine Bedienung des Arbeitshandschuhs auch detektiert werden, sobald eine Mindestbewegungsgeschwindigkeit und/oder Mindestbewegungsauslenkung überschritten wird.

Vorzugsweise können dabei die Filtermittel vorkalibriert werden, insbesondere durch Berücksichtigung von Kalibrationsmessungen in einem Manipulationsraum ohne Arbeitshandschuhe und/oder Arbeitshandschuhe in einem nicht eingegriffenen Zustand. Vorzugsweise kann so eine Geometrie des Manipulationsraums erfasst und die Detektion des Arbeitshandschuhs verbessert werden. Bevorzugt sind die Sensor-Daten in einem Frequenzbereich, insbesondere mittels einer Fourier-Transformation durch die Filtermittel, auswertbar. Insbesondere in dem Frequenzbereich kann eine Art passive Hintergrundschwingung eines eingesetzten Arbeitshandschuhs, der nicht durch eine Bedienperson gegriffen wird, ausgefiltert werden.

Besonders bevorzugt ist der zumindest eine Arbeitshandschuh als ein Ärmelhandschuh ausgebildet und der Erfassungsbereich der Sensormittel zumindest auf einen Ärmelabschnitt des Ärmelhandschuhs ausgerichtet. Dadurch lässt sich bevorzugt nicht nur ein Auswechseln, insbesondere ein Einsetzen, des Arbeitshandschuhs detektieren, sondern auch eine Bedienung, insbesondere eine relativ zu einer Befestigungsposition der Sensormittel auslenkende Bewegung des Arbeitshandschuhs.

Erfindungsgemäß sind die Sensormittel als zumindest ein Radarsensor ausgebildet, wobei mittels der Erfassungseinheit insbesondere zeitlich veränderliche Bewegungssensordaten auswertbar sind, um den zumindest einen Arbeitshandschuh zu detektieren. Insbesondere durch eine Puls-Echo Messung kann durch Auswertung rückstrahlender elektromagnetischer Radarwellen eine Außenkontur des Arbeitshandschuhs, insbesondere im Bereich der Eingriffsöffnung, erfasst werden, wobei, der zumindest eine Arbeitshandschuh in einem erkennbar unterschiedlichem Maße zu dem umgebenden Manipulationsraum Radarwellen reflektiert, die durch Signalauswertung, insbesondere mit den Filtermitteln, zur stationären Detektion mittels der Erfassungseinheit erfassbar sind.

Zusätzlich kann, insbesondere durch Messung einer Doppler-Frequenzverschiebung eines rückstrahlenden Radarsignals, eine Bewegungsgeschwindigkeit des zumindest einen Arbeitshandschuhs relativ zu der Befestigungsposition des zumindest einen Radarsensors bestimmt werden. Der zumindest eine Radarsensor kann in Verbindung mit der Erfassungseinheit also gleichzeitig zur Objekterkennung, sowie zur Erfassung von Bewegungen ausgebildet sein, insbesondere einer Bewegungsgeschwindigkeit und -richtung. Vorzugsweise ist die Erfassungseinheit derart ausgestaltet, dass insbesondere periodische Bewegungen, insbesondere auf Grund einer Luftströmung innerhalb des Manipulationsraums, insbesondere mit den Filtermitteln, gefiltert werden, um zuverlässig eine Bedienbewegung oder ein Auswechseln des zumindest einen Arbeitshandschuhs zu erfassen.

Vorteilhafterweise können Radarsensoren in verschiedensten Umgebungsbedingungen zuverlässig eingesetzt werden und es wurde dessen Überwachungseignung insbesondere in Verbindung mit Dekontaminationsprozessen und/oder Produktions-Handhabungsschritten in dem Manipulationsraum erkannt. Im Vergleich zu optischen Sensormitteln sind die Radarsensoren vorteilhafterweise nicht von einer Beleuchtung des Manipulationsraums abhängig und sind auch funktionstüchtig, falls ein Sichtfeld der Sensormittel aufgrund von erhöhter Feuchtigkeit, Temperatur und/oder Rauchentwicklung eingeschränkt ist.

Vorzugsweise weist der zumindest eine Radarsensor zumindest eine Empfänger- und zumindest eine Sender-Antenne, bevorzugt vier Empfänger- und drei Sender-Antennen, auf, die besonders bevorzugt auf einer Platine angeordnet sind und wobei der zumindest eine Radarsensor zur Erzeugung eines Radarsignals in einem Frequenzbereich von vorzugsweise 60GHz bis 80GHz ausgebildet ist.

Insbesondere durch die Verwendung mehrerer Empfänger- und/oder Senderantennen, kann durch geeignete Frequenzmodulation eines Sendesignals auch eine dreidimensionale Erfassung des zumindest einen Arbeitshandschuhs ermöglicht werden. Vorzugsweise kann jedoch der zumindest eine Arbeitshandschuh bereits mit einem kontinuierlichen Radarsignal durch Geschwindigkeitsmessung detektiert werden.

Insbesondere der angegebene Frequenzbereich ermöglicht eine Erfassung und/oder detektierbare Auflösung des zumindest einen Arbeitshandschuhs. Der Frequenzbereich ist vorzugsweise derart ausgebildet, dass der Radarsensor mit einem Abstand zwischen 1cm bis 15m zu der Eingriffsöffnung angeordnet werden kann.

Erfindungsgemäß ist der zumindest eine Radarsensor derart angeordnet und/oder zur Erzeugung eines Radarsignals derart ausgebildet, dass ein Abstrahlungskegel des Radarsensors mit einem Aufweitungswinkel den Erfassungsbereich zur Detektion des zumindest einen Arbeitshandschuhs abdeckt. In diesem Zusammenhang kann insbesondere vorgesehen sein, dass der Radarsensor eine Linse zur Bündelung der Radarstrahlen aufweist. Weiter bevorzugt ist der Aufweitungswinkel einstellbar, wobei der Aufweitungswinkel vorzugsweise kleiner 50° bis 80°, vorzugsweise kleiner 60°, ist.

Vorzugsweise ist der Abstrahlungskegel mit den Filtermittel, insbesondere softwaretechnisch, besonders bevorzugt mit softwaretechnischen Begrenzungsmitteln der Erfassungseinheit, auf den Erfassungsbereich einzelner Arbeitshandschuhe begrenzbar.

Weiter erfindungsgemäß ist der Abstrahlungskegel des zumindest einen Radarsensors auf zumindest zwei Arbeitshandschuhe ausgerichtet, wobei die Erfassungseinheit die Filtermittel, insbesondere softwaretechnische Begrenzungsmittel, zur Aufteilung der Detektion in zumindest einen ersten und einen zweiten Erfassungsbereich aufweist, um rückstrahlende Radarsignale einzelnen Arbeitshandschuhen zuzuordnen. Vorzugsweise handelt es sich um zumindest zwei Arbeitshandschuhe die nebeneinander für den gleichzeitigen Eingriff mit beiden Händen der Bedienperson angeordnet sind. Als Filtermittel können bevorzugt analoge und/oder digitale Filtermittel, insbesondere computer- oder softwarebasiert, verstanden werden, wobei das Radarsignal durch die Filtermittel vorzugsweise bezüglich einer räumlich zu erwartenden Aufteilung der Arbeitshandschuhe unterteilt sind. Vorteilhafterweise kann so mittels nurmehr eines Radarsensors, insbesondere mit einem Sensorelement, mehrere Arbeitshandschuhe unabhängig voneinander überwacht werden. Dabei kann also die Anzahl von Sensorelementen vorteilhafterweise reduziert werden.

In einer weiteren bevorzugten Ausführungsform ist der zumindest eine Radarsensor als zumindest zwei, bevorzugt paarweise, in einem Gehäuse angeordnete Sensorelemente ausgebildet, um mit einem Radarsensor, insbesondere an einer Befestigungsposition, mehrere Eingriffsstationen des Manipulationsraums und/oder mehrere Arbeitshandschuhe zu erfassen. Dadurch kann ein Radarsensor besonders platzsparend in dem Manipulationsraum ausgebildet sein, wobei insbesondere auch eine elektronische Versorgung des Radarsensors in der Isolatorvorrichtung einfach ausgestaltet werden kann.

In diesem Zusammenhang ist bevorzugt, dass in dem Gehäuse ein erstes Sensorelement und ein zweites Sensorelement angeordnet ist, wobei das Gehäuse bevorzugt zwischen zumindest zwei Eingriffsstationen und/oder zumindest zwei Arbeitshandschuhen in dem Manipulationsraum angeordnet ist.

Vorzugsweise zur Überwachung von zwei Eingriffsstationen und/oder zwei Arbeitshandschuhen überlappen sich die Abstrahlungskegel der zwei Sensorelemente nicht in den Erfassungsbereichen der einzelnen Eingriffsstationen. Bevorzugt kann so eine Auswertung der erfassten Sensordaten vereinfacht und entsprechend bekannter einzelner Sensorelemente erfolgen. Alternativ oder zusätzlich können die Abstrahlungskegel zur Vermeidung einer Überlappung auch mit den Filtermitteln softwaretechnisch begrenzt werden und/oder die rückstrahlenden Radarsignale softwaretechnisch entsprechend den zu erfassenden Erfassungsbereich mit den Filtermitteln gefiltert werden.

Alternativ oder zusätzlich kann eine Überlappung der Abstrahlungskegel der zwei Sensorelemente gewünscht sein, um zusätzlich eine mittlere dritte Eingriffsstation und/oder einen mittleren dritten Arbeitshandschuh zu erfassen. Vorzugsweise können in dieser Ausführungsform drei Eingriffsstationen und/oder drei Arbeitshandschuhe mit zwei Sensorelementen in einem Gehäuse erfasst werden.

Weiter ist es denkbar, dass durch eine Überlappung der Abstrahlungskegel der zwei Sensorelemente eine Auflösung des zu detektierenden Objekts verbessert werden kann, insbesondere da die Abstrahlungskegel aus unterschiedlichen Einfallwinkeln das zu detektierende Objekt erfassen und eine potentielle Schattenbildung verringern.

Vorzugsweise ist der zumindest eine Radarsensor in dem Gehäuse gegen Umwelteinflüsse abgedichtet, insbesondere ein zweiteiliges Edelstahlgehäuse, wobei das Gehäuse vorzugsweise ein Radarstrahlen durchlässiges Abdeckelement, insbesondere ein Schutzglas, aufweist, um einen Erfassungsabschnitt des zumindest einen Radarsensors abzudecken. Das Abdeckelement ist dabei transparent für die ausgegebene und empfangene Radarstrahlung und schützt den Radarsensor gleichzeitig vor den Umwelteinflüssen während eines Dekontaminationsprozesses. Bei der Verwendung von mehreren Sensorelementen können auch jeweils mehrere Abdeckelemente verwendet werden. Insbesondere der kombinierte Einsatz eines gegen Umwelteinflüsse widerstandsfähigen Metallgehäuses mit einem für Radarstrahlen durchlässigen Schutzglases, kann vorteilhafterweise die Lebensdauer des Radarsensors in einer Dekontaminationsumgebung bei gleichzeitiger Gewährleistung der Detektionsfunktion erhöht werden. Weiter bevorzugt ist das Abdeckelement möglichst auf die Dimension des Radarsensors abgestimmt und derart dimensioniert, dass die Radarstrahlen nicht durch das Gehäuse selbst gestört werden. Das Gehäuse ist bevorzugt zweiteilig ausgebildet und weist vorzugsweise einen O-Ring zur Abdichtung zweier Gehäuseteile auf.

Weiter bevorzugt ist vorgesehen, dass die Erfassungseinheit mit einer Anlagensteuerung verbunden ist, um bei einer Eingriffsdetektion des zumindest einen Arbeitshandschuhs in einen Sperrbereich des Manipulationsraums einen Manipulationsprozess zu stoppen und/oder ein Warnsignal auszugeben, und/oder um Umgebungsbetriebsparameter für eine manuelle Manipulation einzustellen, wobei vorzugsweise die Erfassungseinheit zur Protokollierung der Eingriffsdetektion eine Speichereinheit aufweist.

Unter dem Sperrbereich kann bevorzugt ein Handhabungsbereich und/oder ein Abfüllbereich verstanden werden, falls darin automatisierte Prozesse, insbesondere Abfüllprozesse, mit bewegten Maschinen ausgeführt werden und/oder Gefahrgut gelagert wird und/oder Dekontaminationsprozesse ausgeführt werden. Ein Eingriff in einen solchen Sperrbereich sollte also zur Vermeidung von Verletzungen der Bedienperson überwacht werden. Vorteilhafterweise können bildgebende Sensormittel nicht nur als eine Art Lichtschranke einen Eingriff in den Sperrbereich detektieren, sondern auch eine sichere Bewegung innerhalb des Sperrbereich durch eine verfeinerte Detektion gewährleisten.

Insbesondere für Dekontaminationsprozesse kann der gesamte Manipulationsraum einen Sperrbereich darstellen, wobei dann eine Detektion einer Bedienbewegung des Arbeitshandschuhs unmittelbar ein Warnsignal und/oder eine Unterbrechung des Dekontaminationsprozesses durch die Anlagensteuerung auslöst.

Vorzugsweise kann ein Erfassungsbereich der Sensormittel auch auf einen Handbereich des zumindest einen Arbeitshandschuhs ausgerichtet, insbesondere für örtlich begrenzte Sperrbereich, da die Bedienperson üblicherweise zuerst mit dem Handbereich in den Sperrbereich eingreift.

Die Erfassungseinheit umfasst vorzugsweise zumindest ein Gateway zur Verbindung mit zumindest einem Sensorelement der Sensormittel, insbesondere des Radarsensors, und eine speicherprogrammierbare Sensorsteuerung, wobei mehrere Gateways mittels eines Schaltelements mit der Sensorsteuerung verbunden sind. Bei der Verwendung mehrerer Sensorelemente, insbesondere in einem gemeinsamen Gehäuse, können diese zur Datenübertragung jeweils an einem Gateway angeschlossen werden. Die einzelnen Gateways können dann jeweils an ein Schaltelement angeschlossen werden, um gemeinsam Sensordaten auf die Sensorsteuerung zu übertragen.

Die Erfindung betrifft weiterhin ein Verfahren zur Überwachung einer Isolatorvorrichtung, insbesondere einer zuvor beschriebenen Isolatorvorrichtung, aufweisend einen Manipulationsraum mit Sensormitteln, wobei eine Bedienperson mit zumindest einem Arbeitshandschuh, insbesondere ein Ärmelhandschuh, zumindest durch eine Eingriffsöffnung in den Manipulationsraum eingreift und/oder den zumindest einen Arbeitshandschuh in die Eingriffsöffnung zur Abdichtung des Manipulationsraums einsetzt, wobei die Sensormittel beabstandet zu der Eingriffsöffnung im Manipulationsraum angeordnet und mit einer Erfassungseinheit verbunden sind.

Die folgenden Verfahrensschritte werden in einer bevorzugten Reihenfolge zur Überwachung der Isolatorvorrichtung aufgelistet, wobei von dieser Reihenfolge in beliebiger Weise abgewichen werden kann.

**In** einem ersten Schritt wird ein Erfassungsbereich der Sensormittel, insbesondere von bildgebenden Sensormitteln, wenigstens auf einen Arbeitsbereich des zumindest einen Arbeitshandschuhs im Bereich der Eingriffsöffnung, insbesondere einen Querschnitt mit Durchmesser der Eingriffsöffnung, vorzugsweise einem maximalen Durchmesser einer elliptischen Eingriffsöffnung, ausgerichtet. In einem zweiten Schritt werden rückstrahlende Sensorsignale erfasst und mittels der Erfassungseinheit ausgewertet. Anschließend befindet sich die Isolatorvorrichtung in einem Art Überwachungszustand. Sobald in einem nächsten Schritt der zumindest eine Arbeitshandschuh eingesetzt, ausgewechselt oder bewegt wird, kann diese Bewegung mittels der Sensormittel detektiert werden. In einem dritten Schritt wird also eine Einsetz- und/oder Bedienbewegung des zumindest einen Arbeitshandschuhs, insbesondere eine Geschwindigkeits- und/oder Wegänderung bezüglich einer Referenzstellung des Arbeitshandschuhs und/oder einer objektfreien Detektion des Arbeitsbereichs und/oder eine Abweichung von einem passiven Bewegungsmuster, insbesondere periodisch schwingenden Bewegungsmuster, detektiert. Bevorzugt kann ein Einsetzen oder Auswechseln des zumindest einen Arbeitshandschuhs aus einem Vergleich mit einer Referenzmessung des objektfreien Hintergrunds des Manipulationsraums erfolgen.

Zur Überwachung der Isolatorvorrichtung sind die Sensormittel erfindungsgemäß als zumindest ein Radarsensor ausgebildet und der zumindest eine Radarsensor wird in dem Manipulationsraum derart angeordnet und/oder ein Radarsignal wird derart erzeugt, insbesondere durch Auswahl einer geeigneten Wellenlänge, dass ein Abstrahlungskegel des Radarsensors, insbesondere mit zumindest einer Radarantenne und zumindest einer Senderantenne, den Erfassungsbereich abdeckt.

Weiter erfindungsgemäß wird zur Überwachung einer Isolatorvorrichtung mit zumindest zwei Arbeitshandschuhen ein Abstrahlungskegel des zumindest einen Radarsensors zuerst auf die zumindest zwei Arbeitshandschuhe ausgerichtet und in einem bevorzugten anschließenden zweiten Schritt zur Auswertung mittels der Erfassungseinheit mit Filtermitteln, insbesondere softwaretechnische Begrenzungsmittel, in zumindest zwei Erfassungsbereiche unterteilt, um rückstreuende Radarsignale den einzelnen Arbeitshandschuhen zuzuordnen.

Als Filtermittel können analoge und/oder digitale Filtermittel, insbesondere computer- oder softwarebasiert, verstanden werden, wobei das Radarsignal durch die Filtermittel vorzugsweise bezüglich einer räumlich zu erwartenden Aufteilung der Arbeitshandschuhe unterteilt sind und zur Auswertung einer Detektion des einzelnen Arbeitshandschuhs an die Erfassungseinheit weiterleitet.

In eine weiteren bevorzugten Verfahrensvariante wird zur Überwachung der Isolatorvorrichtung, bevorzugt anschließend an eine Detektion des zumindest einen Arbeitshandschuhs, ein von der Erfassungseinheit erfasstes Signal an eine Anlagensteuerung gesendet, um bei einem manuellen Eingriff des zumindest einen Arbeitshandschuhs in einen Sperrbereich, insbesondere eines automatischen Maschinenprozesses und/oder einer Gefahrgutlagerstelle und/oder eines Dekontaminationsprozesses, ein Warnsignal an die Bedienperson ausgegeben und/oder ein weiterer, insbesondere automatischer, Betrieb der Isolatorvorrichtung zu stoppen oder einzuschränken. Vorzugsweise kann durch die Einschränkung eines automatischen Betriebs eine Kollision mit einer Hand oder eine Verletzung der Bedienperson vermieden werden.

Zusätzlich oder alternativ wäre es denkbar, dass durch die Detektion des zumindest einen Arbeitshandschuhs und der Kopplung der Erfassungseinheit mit der Anlagensteuerung auch Umgebungsbetriebsparameter in dem Manipulationsraum eingestellt werden, insbesondere eine Beleuchtungseinstellung und/oder Fluidstörmung, in Abhängigkeit des Eingriffs. Besonders bevorzugt wird in einem weiteren Verfahrensschritt das durch die Erfassungseinheit detektierte Sensorsignal zur Protokollierung der Eingriffsdetektion auf der Speichereinheit abgespeichert.

Insbesondere um die bisher beschriebenen Verfahrensschritte durchzuführen, wird ein Computerprogramm mit Programmcode-Mitteln verwendet, das auf einem computerlesbaren Datenträger gespeichert ist, und die Verfahrensschritte ausführt, wenn das Computerprogrammprodukt auf einem Computer oder auf einer entsprechenden Rechnereinheit entsprechend der zuvor beschriebenen Isolatorvorrichtung, insbesondere einer Anlagensteuerung und/oder einer Erfassungseinheit, ausgeführt wird.

Weitere Vorteile und Einzelheiten der Erfindung ergeben sich aus der nachfolgenden Beschreibung bevorzugter Ausführungsformen der Erfindung, sowie anhand lediglich schematischen Zeichnungen.

Es zeigen:
- Fig. 1:: eine perspektivische Ansicht auf eine Isolatorvorrichtung mit Manipulationsraum, Arbeitshandschuhen und Radarsensor,
- Fig. 2:: eine Draufsicht auf die Isolatorvorrichtung gemäß der Fig. 1 mit einem Erfassungsbereich des Radarsensors,
- Fig. 3:: eine Ansicht der Isolatorvorrichtung gemäß der Fig. 2 mit Abstrahlungskegel des Radarsensors,
- Fig. 4a, Fig. 4b:: eine Detailansicht auf den Radarsensor gemäß der Fig. 1,
- Fig. 5a, 5b:: Detailansichten auf ein Sensorelement des Radarsensors gemäß der Fig. 4a und der Fig. 4b,
- Fig. 6a bis Fig. 6e:: Ansichten auf das Gehäuse des Radarsensors gemäß der Fig. 4a und der Fig. 4b,
- Fig. 7:: Schaltplan einer Erfassungseinheit des Radarsensors gemäß der Fig. 1.

Gleiche Elemente beziehungsweise Elemente mit gleicher Funktion sind in den Figuren mit den gleichen Bezugsziffern versehen.

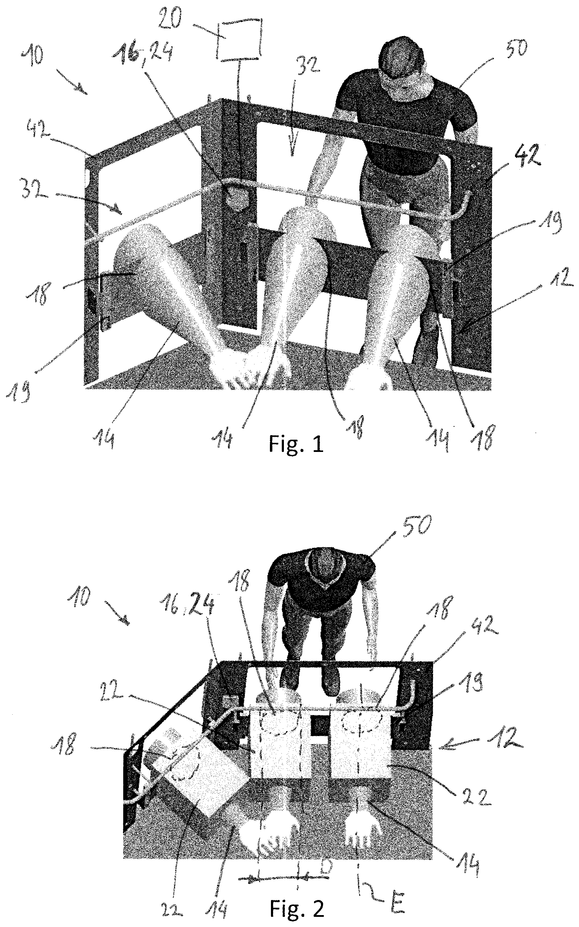

In der Fig. 1 ist eine Isolatorvorrichtung 10, insbesondere für pharmazeutische und/oder biotechnische Anwendung, mit einer schematischen Ansicht auf einen Innenbereich eines Manipulationsraums 12 dargestellt. Bei dem Manipulationsraum 12 handelt es sich insbesondere um einen Raum für Dekontaminationsprozesse, der von der Umgebung abgedichtet abgetrennt ist und eine definierte Fluidströmung beinhaltet und/oder einen Zugang für einen Abfüll- und/oder einen Handhabungsraum ausbildet. Um einer Bedienperson 50 einen manuellen Eingriff zu ermöglichen, sind Arbeitshandschuhe 14 jeweils an einer Eingriffsöffnung 18 des Manipulationsraums 12, insbesondere an seitlichen Isolatorwänden 42, angeordnet. Dabei sind die Arbeitshandschuhe 14 vorzugsweise auswechselbar und dichten die Isolatorvorrichtung 10 im eingesetzten Zustand ab. Beispielhaft sind zwei Eingriffsstationen 32 für die Bedienperson 50 dargestellt, wobei ein Eingriff entweder mittels einem einzelnen Arbeitshandschuh 14 und/oder zweier paarweise nebeneinander angeordneter Arbeitshandschuhe 14 erfolgen kann.

Vorzugsweise sind die hier dargestellten Arbeitshandschuhe 14 für eine möglichst weitreichende Bewegungsfreiheit und einen großen Arbeitsbereich als Ärmelhandschuhe ausgebildet. Weiter kann bevorzugt sein, dass die Arbeitshandschuhe 14 mittels einer Einsetzvorrichtung 19 insbesondere einzeln oder paarweise einsetzbar sind, welche die Eingriffsöffnung 18 für den jeweiligen Arbeitshandschuh 14 beinhaltet.

Zur Registrierung und/oder zur Detektion eines Auswechselns eines Arbeitshandschuhs 14, insbesondere ein Einsetzen oder Herausnehmen der Einsetzvorrichtung 19, sowie zur Detektion eines Eingriffs einer Bedienperson 50 in den Manipulationsraum 12, sind Sensormittel 16 beabstandet zu der Eingriffsöffnung 18 angeordnet, bevorzugt zwischen den zwei Eingriffsstationen 32 an einer Isolatorwand 42 befestigt und mit einer Erfassungseinheit 20 verbunden. Vorzugsweise handelt es sich bei den Sensormittel 16 um bildgebende Sensormittel, die aus einer Entfernung und insbesondere kontaktlos den Arbeitshandschuh 14 wenigstens teilweise erfassen.

In der Fig. 2 ist ein Erfassungsbereich 22 der Sensormittel 16 für die gezeigten Arbeitshandschuhe 14 schematisch und boxartig dargestellt, wobei dieser Erfassungsbereich 22 wenigstens einen Arbeitsbereich der dargestellten Arbeitshandschuhe 14 im Bereich der Eingriffsöffnung 18 umfasst. Vorzugsweise umfasst der Erfassungsbereich 22 zumindest einen Querschnitt mit Durchmesser D der Eingriffsöffnung 18, insbesondere einen maximalen Durchmesser einer elliptischen Eingriffsöffnung, um wenigstens ein Auswechseln und/oder einen Eingriff innerhalb der Eingriffsöffnung 18 detektieren zu können. Als Arbeitsbereich wird ein Raumabschnitt angrenzend an die Arbeitshandschuhe 14 verstanden, in dem die Bedienperson 50 eine mögliche Arbeitsbewegung ausführen kann. Für die vorliegend als Ärmelhandschuhe ausgebildeten Arbeitshandschuhe 14 umfasst der Erfassungsbereich 22 bevorzugt auch einen Ärmelabschnitt und ist entlang einer Erstreckungsachse E des Arbeitshandschuhs 14 ausgerichtet, wobei diese Erstreckungsachse E bevorzugt senkrecht zu einer Ebene der Eingriffsöffnung 18 steht und durch einen Mittelpunkt der Eingriffsöffnung 18 verläuft. Vorzugsweise wird der Erfassungsbereich 22 mit Filtermitteln der Erfassungseinheit softwaretechnisch begrenzt, insbesondere mit softwaretechnischen Begrenzungsmitteln, und bildet ein räumliches Sichtfenster der Sensormittel 16 als eine Art Bewegungszone oder einen räumlichen Bereich von Interesse aus, in der Bedienbewegungen des Arbeitshandschuhs 14 detektierbar sind. Dadurch können bewegte Objekte außerhalb des Bereichs von Interesse ausgeblendet und durch softwaretechnische Filterung von der Detektion ausgeschlossen werden. Weiter können mit den Filtermitteln auch bewegte Hintergrundobjekte, insbesondere in der Isolatorvorrichtung und hier nicht dargestellte aufgehängte Objekte mit periodischer Bewegung, außerhalb, insbesondere auch innerhalb, des Erfassungsbereichs herausgefiltert werden.

Als Sensormittel 16 können bildgebende Sensormittel, insbesondere auf der Grundlage optischer Erfassung mittels Kameras oder der Messung von Laser-, Ultraschall- oder Radarstrahlung basieren. Insbesondere eine optische Erfassung kann jedoch durch Dekontaminationsprozesse innerhalb der Isolatorvorrichtung 10 stark beeinflusst werden, z.B. durch wechselnde Umgebungsbedingungen, in Feuchtigkeit, Temperatur und Beleuchtung, weshalb eine zuverlässige Überwachung mit optischen Methoden problematisch sein kann. In einer bevorzugten Ausführungsform der vorliegenden Erfindung sind die Sensormittel 16 deshalb als Radarsensoren 24 ausgebildet, die im Wesentlichen unabhängig von den Umgebungsbedingungen eine zuverlässige Überwachung ermöglichen.

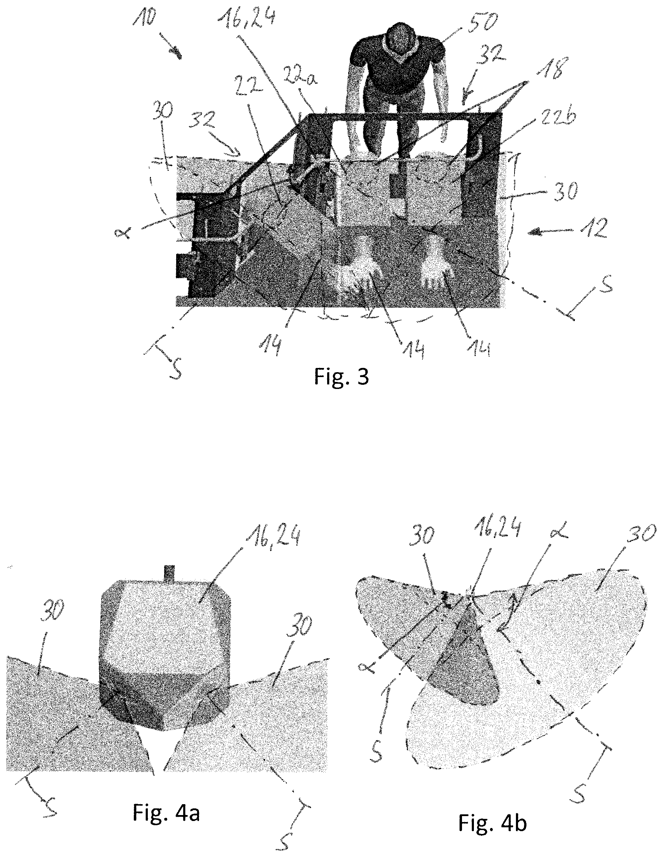

In der Fig. 3, Fig. 4a und Fig. 4b sind die Sensormittel 16 als Radarsensoren 24 im Detail mit einem Abstrahlungskegel 30 zur Visualisierung ausgesendeter Radarsignale oder Radarwellen dargestellt. Der Radarsensor 24 ist derart angeordnet und/oder zur Erzeugung eines Radarsignals derart ausgebildet, dass der Abstrahlungskegel 30 mit einem Aufweitungswinkel α den boxartig dargestellten Erfassungsbereich 22, wenigstens im Bereich der Eingriffsöffnung 18, zur Detektion des zumindest einen Arbeitshandschuhs 14 abdeckt. Der Abstrahlungskegel 30 ist hier um eine Strahlungsachse S mit einem Aufweitungswinkel α ausgebildet, vorzugsweise von weniger als 50° bis 80°, besonders bevorzugt weniger als 60°.

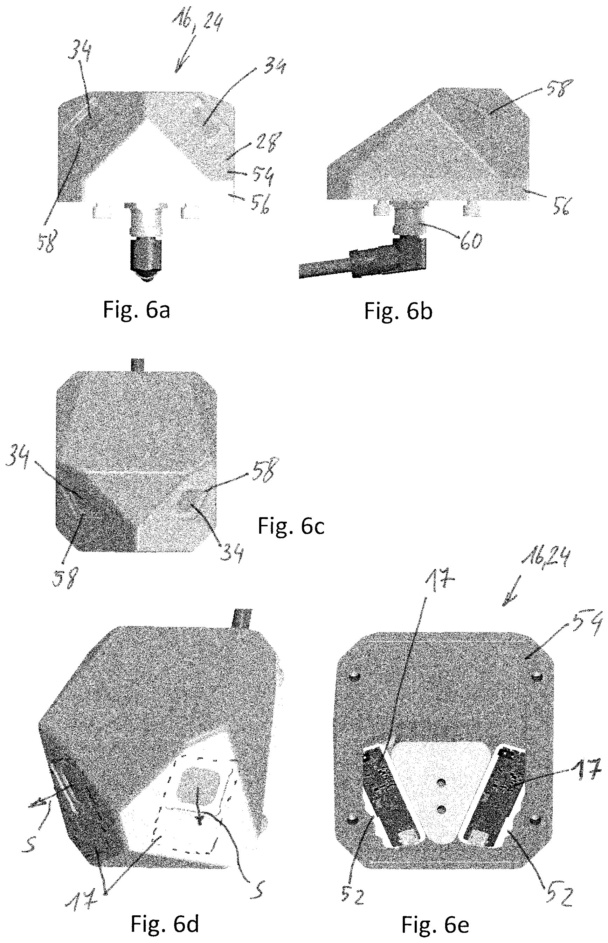

Der in der Fig. 4a und den Fig. 6a bis Fig. 6e dargestellte Radarsensor 24 ist vorzugsweise als paarweise in einem Gehäuse 28 angeordnete Sensorelemente 17 ausgebildet, um insbesondere die zwei Eingriffsstationen 32 des Manipulationsraums 12 und die Arbeitshandschuhe 14 mittels eines Radarsensors 24 zu erfassen.

Die zwei Abstrahlungskegel 30 der zwei Sensorelemente 17 sind vorzugsweise derart ausgebildet und/oder ausgerichtet, dass eine mögliche Überlappung von Radarsignalen nicht innerhalb der Erfassungsbereiche 22 der zwei Eingriffsstationen 32 und/oder der Arbeitshandschuhe 14 erfolgt, um so eine Auswertung rückstrahlender Radarsignal zu vereinfachen.

Alternativ oder zusätzlich können die zwei Abstrahlungskegel 30 zur Vermeidung einer Überlappung auch softwaretechnisch mit den Filtermitteln begrenzt werden und/oder die rückstrahlenden Radarsignale softwaretechnisch entsprechend den zu erfassenden Erfassungsbereich 22 gefiltert oder begrenzt werden.

Alternativ wäre es denkbar, dass die zwei Abstrahlungskegel 30 sich gerade in einem Erfassungsbereich 22 überlappen und durch Ausnutzung unterschiedlich ausgerichteter Strahlungsachsen S eine Auflösung des zu detektierenden Objekts verbessert werden kann. In diesem Zusammenhang wäre es außerdem denkbar, dass weitere nicht dargestellte Radarsensoren 24 verwendet werden, um eine möglichst vollumfängliche Detektion eines Arbeitshandschuhs 14 und/oder einer Eingriffsstation 32 zu erreichen. Dadurch kann ein Art Schattenbereich eines Radarsensors 24 ebenfalls erfasst werden.

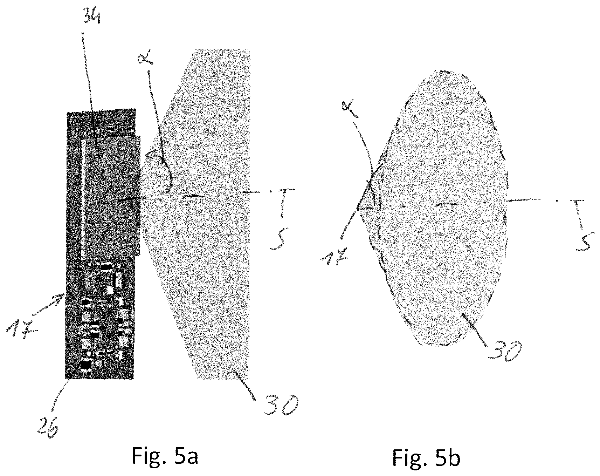

Ein Sensorelement 17 des Radarsensors 24 ist in der Fig. 5a und der Fig. 5b mit entsprechendem Abstrahlungskegel 30 entlang der Strahlungsachse S dargestellt, wobei die Strahlungsachse S senkrecht zu einem Erfassungsabschnitt 34, insbesondere einer Erfassungssensoroberfläche, ausgebildet ist. Vorzugsweise weist das Sensorelement 17 des Radarsensors 24 zumindest eine Empfänger- und zumindest eine SenderAntenne, bevorzugt vier Empfänger- und drei Sender-Antennen, auf, die wie hier dargestellt vorzugsweise auf einer Platine 26 angeordnet sind. Ein solches Sensorelement 17 kann zur Erzeugung von Radarsignalen in einem Frequenzbereich von vorzugsweise 60GHz bis 80GHz ausgebildet sein, um Objekte, insbesondere Arbeitshandschuhe 14 in einem Abstand zu dem Radarsensor 24 zwischen 1cm und 15m detektieren zu können.

Wie in der Fig. 3 weiter gezeigt, kann der Abstrahlungskegel 30 des zumindest einen Radarsensors 24 auf zwei Arbeitshandschuhe 14 ausgerichtet sein, die insbesondere paarweise nebeneinander angeordnet und für einen zweihändigen Eingriff der Bedienperson 50 ausgebildet sind. In dieser Ausführungsform weist die Erfassungseinheit 20 vorzugsweise ein Filtermittel zur Aufteilung der Detektion in einen ersten und einen zweiten Erfassungsbereich 22a, 22b auf, um rückstrahlende Radarsignale den einzelnen Arbeitshandschuhen 14 zuzuordnen. Als Filtermittel können bevorzugt analoge und/oder digitale Filtermittel, insbesondere computeroder softwarebasiert, verstanden werden, wobei die rückstrahlenden Radarsignale durch die Filtermittel vorzugsweise bezüglich einer räumlich zu erwartenden Aufteilung der Arbeitshandschuhe 14 unterteilt sind, insbesondere den gewünschten zwei Erfassungsbereichen 22a, 22b. Vorteilhafterweise kann so mittels nurmehr eines Radarsensors 24, insbesondere mit einem Sensorelement 17, mehrere Arbeitshandschuhe 14 unabhängig voneinander überwacht werden. Dabei kann also die Anzahl von Sensorelementen 17 vorteilhafterweise reduziert werden.

Alternativ oder zusätzlich ist es denkbar, dass zur Detektion des in der Fig. 3 dargestellten mittleren Arbeitshandschuhs 14 im ersten Erfassungsbereich 22a die Abstrahlungskegel 30 sich im ersten Erfassungsbereich 22a überlappen. Durch die Überlappung der Abstrahlungskegel 30 kann einerseits die Auflösung im ersten Erfassungsbereich 22a und eine Unterscheidung zu dem zweiten Erfassungsbereich 22b verbessert werden.

Wie in den Fig. 6a bis Fig. 6e weiter gezeigt, kann das Gehäuse 28 des Radarsensors 24 zweiteilig ausgebildet sein, wobei in einem Oberteil 54 die Sensorelemente 17 angeordnet werden können. Weiter weist das Gehäuse 28 abgeflachte und entsprechend einer gewünschten Abstrahlungsrichtung entlang der Strahlungsache S angeordnete Aufnahmeabschnitte 52 für die Sensorelemente 17 auf. Besonders bevorzugt weist der Aufnahmeabschnitt 52 einen Ausschnitt zur Einlage eines Abdeckelements 58, insbesondere eines Schutzglases, auf, das insbesondere für Radarstrahlung durchlässig ist. Das Abdeckelement 58 verdeckt und schützt den Erfassungsabschnitt 34 des Radarsensors 24, insbesondere eines Sensorelements 17. Weiter wäre es denkbar, dass das Abdeckelement 58 als Linse zur Bündelung der Radarstrahlung ausgebildet ist. Insbesondere auf Grund der Umgebungsbedingungen in einem Dekontaminationsprozess, ist zur Gewährleistung einer hohen Laufzeit des Radarsensors 24 das Gehäuse 28 aus Metall, insbesondere Edelstahl, und/oder chemisch widerstandsfähigen Kunststoff ausgebildet, wobei das Abdeckelement 58 eine Ablenkung oder Störung der Radarstrahlung verhindert. Im Unterteil 56 ist eine Kabelaufnahme 60 angeordnet, um die Sensorelemente 17 mit der Erfassungseinheit 20 zu verbinden. Zum Schutz vor Umwelteinflüssen sind die zwei Teile 54, 56 des Gehäuses mit einem hier nicht dargestellten O-Ring abgedichtet.

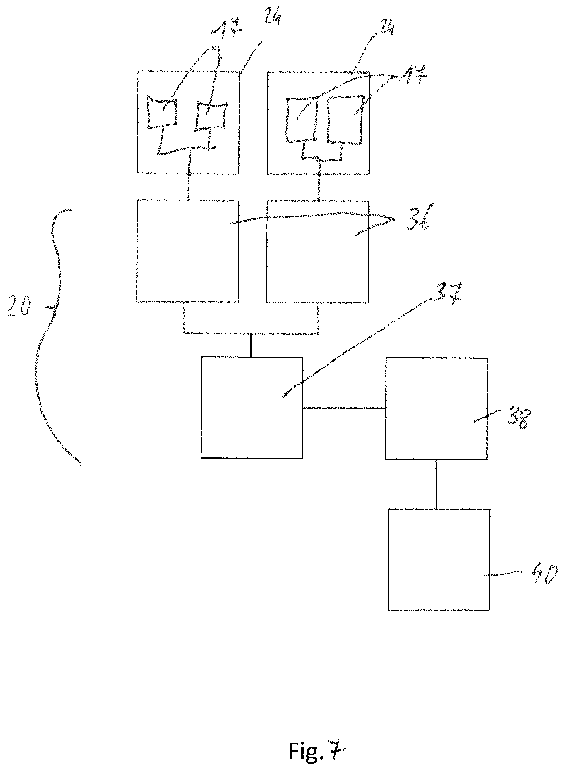

Die Fig. 7 zeigt eine beispielhafte Schaltungsanordnung, insbesondere für zwei Radarsensor 24 mit jeweils zwei Sensorelementen 17 nach der Fig. 6a bis Fig. 6e und einer Erfassungseinheit 20. Die Erfassungseinheit 20 umfasst zur Verbindung der zwei Sensorelemente 17 vorzugsweise jeweils ein Gateway 36, die wiederum mittels eines Schaltelements 37 mit einer Sensorsteuerung 38 verbunden sind. Dabei können die Sensordaten mehrere Sensorelemente 17 vorzugsweise gemeinsam auf die Sensorsteuerung 38 übertragen werden.

Weiter wäre es denkbar, dass die Erfassungseinheit 20, insbesondere die Sensorsteuerung 38, mit einer Anlagensteuerung 40 verbunden ist, um bei einer Eingriffsdetektion des zumindest einen Arbeitshandschuhs 14 in einen Sperrbereich des in der Fig. 1 dargestellten Manipulationsraums 12 einen Manipulationsprozess zu stoppen und/oder ein Warnsignal auszugeben, und/oder um Umgebungsbetriebsparameter für eine manuelle Manipulation einzustellen. Unter dem Sperrbereich kann bevorzugt ein Handhabungsbereich und/oder ein Abfüllbereich gelten, falls darin automatisierte Prozesse, insbesondere Abfüllprozesse, mit bewegten Maschinen ausgeführt werden und/oder Gefahrgut gelagert wird und/oder Dekontaminationsprozesse ausgeführt werden. In diesem Zusammenhang kann die Erfassungseinheit 20 zur Protokollierung der Eingriffsdetektion eine hier nicht dargestellte Speichereinheit aufweisen.

### Bezugszeichenliste

- 10: Isolatorvorrichtung
- 12: Manipulationsraum
- 14: Arbeitshandschuh
- 16: Sensormittel
- 17: Sensorelement
- 18: Eingriffsöffnung
- 19: Einsetzvorrichtung
- 20: Erfassungseinheit
- 22: Erfassungsbereich
- 22a, 22b: erster und zweiter Erfassungsbereich
- 24: Radarsensor
- 26: Platine
- 28: Gehäuse des Radarsensors
- 30: Abstrahlungskegel
- 32: Eingriffsstation
- 34: Erfassungsabschnitt des Sensorelements
- 36: Gateway
- 37: Schaltelement
- 38: Sensorsteuerung
- 40: Anlagensteuerung
- 42: Isolatorwände
- 50: Bedienperson
- 52: Aufnahmeabschnitt des Gehäuses
- 54: Oberteil des Gehäuses
- 56: Unterteil des Gehäuses
- 58: Abdeckelement des Gehäuses
- 60: Kabelaufnahme des Unterteils
- D: Durchmesser der Eingriffsöffnung
- E: Erstreckungsachse des Arbeitshandschuhs
- S: Strahlungsachse des Sensorelements

## Patentansprüche

1. Isolatorvorrichtung (10), insbesondere für pharmazeutische und/oder biotechnische Anwendungen, aufweisend einen Manipulationsraum (12), zumindest einen in den Manipulationsraum (12) einsetzbaren Arbeitshandschuh (14) und Sensormittel (16) zur Erfassung eines eingesetzten Zustandes des zumindest einen Arbeitshandschuhs (14), wobei der zumindest eine Arbeitshandschuh (14) in einer Eingriffsöffnung (18) des Manipulationsraums (12) auswechselbar einsetzbar ist und im eingesetzten Zustand die Isolatorvorrichtung (10) abdichtet,
wobei die Sensormittel (16) beabstandet zu der Eingriffsöffnung (18) in dem Manipulationsraum (12) angeordnet und mit einer Erfassungseinheit (20) verbunden sind, wobei ein Erfassungsbereich (22) der Sensormittel (16) wenigstens einen Arbeitsbereich des zumindest einen Arbeitshandschuhs (14) im Bereich der Eingriffsöffnung (18), insbesondere einen Querschnitt mit Durchmesser (D) der Eingriffsöffnung (18), umfasst, um zumindest ein Auswechseln und/oder eine Bedienung des zumindest einen Arbeitshandschuhs (14) in dem Manipulationsraum (12) zu detektieren und mittels der Erfassungseinheit (20) auszuwerten,
**dadurch gekennzeichnet,**
**dass** die Sensormittel (16) als zumindest ein Radarsensor (24) ausgebildet sind, wobei mittels der Erfassungseinheit (20) insbesondere zeitlich veränderliche Bewegungssensordaten auswertbar sind, um den zumindest einen Arbeitshandschuh (14) zu detektieren, wobei der zumindest eine Radarsensor (24) derart angeordnet und/oder zur Erzeugung eines Radarsignals derart ausgebildet ist, dass ein Abstrahlungskegel (30) des zumindest einen Radarsensors (24) mit einem Aufweitungswinkel (α) den Erfassungsbereich (22) zur Detektion des zumindest einen Arbeitshandschuhs (14) abdeckt, wobei der Abstrahlungskegel (30) des zumindest einen Radarsensors (24) auf zumindest zwei Arbeitshandschuhe (14) ausgerichtet ist, wobei die Erfassungseinheit (20) ein Filtermittel zur Aufteilung der Detektion in zumindest einen ersten und einen zweiten Erfassungsbereich (22a, 22b) aufweist, um rückstrahlende Radarsignale einzelnen Arbeitshandschuhen (14) zuzuordnen.

2. Isolatorvorrichtung nach dem Anspruch 1,
**dadurch gekennzeichnet,**
**dass** die Erfassungseinheit (20) Filtermittel, insbesondere computeroder softwarebasiert, aufweist, die dazu ausgebildet sind, den Erfassungsbereich (22) zu begrenzen und/oder einen Schwellwert zur Bewegungsdetektion einzustellen, insbesondere um passive Hintergrundbewegungen herauszufiltern.

3. Isolatorvorrichtung nach dem Anspruch 1 oder 2,
**dadurch gekennzeichnet,**
**dass** der zumindest eine Arbeitshandschuh (14) als ein Ärmelhandschuh ausgebildet ist und der Erfassungsbereich (22) der Sensormittel (16) zumindest auf einen Ärmelabschnitt des Ärmelhandschuhs ausgerichtet ist.

4. Isolatorvorrichtung nach einem der Ansprüche 1 bis 3,
**dadurch gekennzeichnet,**
**dass** der zumindest eine Radarsensor (24) zumindest eine Empfängerund zumindest eine Sender-Antenne, bevorzugt vier Empfänger- und drei Sender-Antennen, aufweist, die vorzugsweise auf einer Platine (26) angeordnet sind, und wobei der Radarsensor (24) zur Erzeugung eines Radarsignals in einem Frequenzbereich von vorzugsweise 60GHz bis 80GHz ausgebildet ist.

5. Isolatorvorrichtung nach einem der Ansprüche 1 bis 4,
**dadurch gekennzeichnet,**
**dass** der Radarsensor (24) als zumindest zwei, bevorzugt paarweise, in einem Gehäuse (28) angeordnete Sensorelemente (17) ausgebildet ist, um mehrere Eingriffsstationen (32) des Manipulationsraums (12) und/oder mehrere Arbeitshandschuhe (14) zu erfassen.

6. Isolatorvorrichtung nach einem der Ansprüche 1 bis 5,
**dadurch gekennzeichnet,**
**dass** der zumindest eine Radarsensor (24) in einem Gehäuse (28) gegen Umwelteinflüsse abgedichtet ist, insbesondere ein zweiteiliges Edelstahlgehäuse, wobei das Gehäuse vorzugsweise ein für Radarstrahlen durchlässiges Abdeckelement (58), insbesondere ein Schutzglas, aufweist, um einen Erfassungsabschnitt (34) des Radarsensors (24) abzudecken.

7. Isolatorvorrichtung nach einem der Ansprüche 1 bis 6,
**dadurch gekennzeichnet,**
**dass** die Erfassungseinheit (20) mit einer Anlagensteuerung (40) verbunden ist, um bei einer Eingriffsdetektion des zumindest einen Arbeitshandschuhs (14) in einen Sperrbereich des Manipulationsraums (12) einen Manipulationsprozess zu stoppen und/oder ein Warnsignal auszugeben, und/oder um Umgebungsbetriebsparameter für eine manuelle Manipulation einzustellen, wobei vorzugsweise die Erfassungseinheit (20) zur Protokollierung der Eingriffsdetektion eine Speichereinheit aufweist.

8. Isolatorvorrichtung nach einem der Ansprüche 1 bis 7,
**dadurch gekennzeichnet,**
**dass** die Erfassungseinheit (20) zumindest ein Gateway (36) zur Verbindung mit zumindest einem Sensorelement (17) der Sensormittel (16) und eine speicherprogrammierbare Sensorsteuerung (38) umfasst, wobei mehrere Gateways (36) mittels eines Schaltelements (37) mit der Sensorsteuerung (38) verbunden sind.

9. Verfahren zur Überwachung einer Isolatorvorrichtung (10), insbesondere nach einem der Ansprüche 1 bis 8, aufweisend einen Manipulationsraum (12) mit Sensormitteln (16), wobei eine Bedienperson (50) mit zumindest einem Arbeitshandschuh (14), insbesondere ein Ärmelhandschuh, zumindest durch eine Eingriffsöffnung (18) in den Manipulationsraum (12) eingreift oder den zumindest einen Arbeitshandschuh (14) in die Eingriffsöffnung (18) zur Abdichtung des Manipulationsraums (12) einsetzt, wobei die Sensormittel (16) beabstandet zu der Eingriffsöffnung (18) im Manipulationsraum (12) angeordnet und mit einer Erfassungseinheit (20) verbunden sind, mit den folgenden Schritten:
- Ausrichten eines Erfassungsbereichs (22) der Sensormittel (16), insbesondere von bildgebenden Sensormitteln, wenigstens auf einen Arbeitsbereich des zumindest einen Arbeitshandschuhs (14) im Bereich der Eingriffsöffnung (18), wobei die Sensormittel (16) als zumindest ein Radarsensor (24) ausgebildet sind und der zumindest eine Radarsensor (24) in dem Manipulationsraum (24) derart angeordnet wird und/oder ein Radarsignal derart erzeugt wird, insbesondere durch Auswahl einer geeigneten Wellenlänge, dass ein Abstrahlungskegel (30) des Radarsensors (24), insbesondere mit zumindest einer Radarantenne und zumindest einer Senderantenne, wenigstens den Arbeitsbereich der Arbeitshandschuhe (14) im Bereich der Eingriffsöffnung (18) abdeckt und wobei der Abstrahlungskegel (30) des zumindest einen Radarsensors (24) auf zumindest zwei Arbeitshandschuhe (14) ausgerichtet ist,
- Erfassen von rückstrahlenden Sensorsignalen und Auswertung der Sensorsignale mittels der Erfassungseinheit (20), wobei der Abstrahlungskegel (30) zur Auswertung mittels der Erfassungseinheit (20) mit Filtermitteln in zumindest einen ersten und einen zweiten Erfassungsbereich (22a, 22b) unterteilt wird, um rückstrahlende Radarsignale einzelnen Arbeitshandschuhen (14) zuzuordnen,
- Detektion einer Einsetz- und/oder Bedienbewegung des zumindest einen Arbeitshandschuhs (14), insbesondere eine Geschwindigkeits- oder Wegänderung bezüglich einer Referenzstellung des Arbeitshandschuhs (14) und/oder einer objektfreien Detektion des Arbeitsbereichs und/oder eine Abweichung von einem passiven Bewegungsmuster, insbesondere periodisch schwingenden Bewegungsmuster.

10. Verfahren zur Überwachung einer Isolatorvorrichtung (10) nach dem Anspruch 9, wobei bevorzugt anschließend an eine Detektion des zumindest einen Arbeitshandschuhs (14) ein von der Erfassungseinheit (20) erfasstes Signal an eine Anlagensteuerung (40) gesendet wird, um bei einem manuellen Eingriff des zumindest einen Arbeitshandschuhs (14) in einen Sperrbereich, insbesondere eines automatischen Maschinenprozesses, ein Warnsignal an die Bedienperson (50) auszugeben und/oder einen weiteren Betrieb der Isolatorvorrichtung (10) zu stoppen oder einzuschränken.

11. Computerprogramm mit Programmcode-Mitteln, das auf einem computerlesbaren Datenträger gespeichert ist, um alle Schritte eines Verfahrens nach dem Anspruch 9 oder 10 durchzuführen, wenn das Computerprogrammprodukt auf einem Computer oder auf einer entsprechenden Rechnereinheit, insbesondere einer Anlagensteuerung (40) und/oder einer Erfassungseinheit (20), gemäß Anspruch 1 ausgeführt wird.

## Claims

1. An insulator apparatus (10), in particular for pharmaceutical and/or biotechnological applications, the insulator apparatus having a manipulation chamber (12), at least one work glove (14) insertable into the manipulation chamber (12), and sensor means (16) for detecting an inserted state of the at least one work glove (14), the at least one work glove (14) being insertable into an access opening (18) of the manipulation chamber (12) in an exchangeable manner and sealing the insulator apparatus (10) when inserted,
the sensor means (16) being disposed at a distance to the access opening (18) in the manipulation chamber (12) and being connected to a detection unit (20), a detection area (22) of the sensor means (16) comprising at least one operating area of the at least one work glove (14) in the area of the access opening (18), in particular a cross section having a diameter (D) of the access opening (18), in order to detect and to evaluate, by means of the detection unit (20), at least a change and/or an operation of the at least one work glove (14) in the manipulation chamber (12),
**characterized in that**
the sensor means (16) are formed as at least one radar sensor (24), in particular temporally variable motion sensor data being evaluable by means of the detection unit (20) in order to detect the at least one work glove (14), the at least one radar sensor (24) being disposed in such a manner and/or being configured in such a manner to generate a radar signal that an aperture angle (α) of a radiation cone (30) of the at least one radar sensor (24) covers the detection area (22) for detecting the at least one work glove (14), the radiation cone (30) of the at least one radar sensor being directed towards at least two work gloves (14), the detection unit (20) having a filter means for dividing the detection into at least a first and a second detection area (22a, 22b) in order to allocate reflected radar signals to individual work gloves (14).

2. The insulator apparatus according to claim 1,
**characterized in that**
the detection unit (20) has filter means, in particular computer-based or software-based, which are formed to limit the detection area (22) and/or to set a threshold value for movement detection, in particular in order to filter passive background movements.

3. The insulator apparatus according to claim 1 or 2,
**characterized in that**
the at least one work glove (14) is formed as a long-sleeve glove and the detection area (22) of the sensor means (16) is directed towards at least one sleeve portion of the long-sleeve glove.

4. The insulator apparatus according to any one of claims 1 to 3, **characterized in that**
the at least one radar sensor (24) has at least one receiving antenna and at least one transmitting antenna, preferably four receiving antennas and three transmitting antennas, which are preferably disposed on a circuit board (26), and wherein the radar sensor (24) is formed for generating a radar signal in a frequency range of preferably 60 GHz to 80 GHz.

5. The insulator apparatus according to any one of claims 1 to 4, **characterized in that**
the radar sensor (24) is formed as at least two sensor elements (17) disposed, preferably in pairs, in a housing (28) in order to detect several access stations (32) of the manipulation chamber (12) and/or to detect several work gloves (14).

6. The insulator apparatus according to any one of claims 1 to 5, **characterized in that**
the at least one radar sensor (24) is sealed against environmental impacts in a housing (28), in particular a two-part stainless steel housing, the housing preferably having a cover element (58), in particular a protective glass, transparent to radar beams in order to cover a detection portion (34) of the radar sensor (24).

7. The insulator apparatus according to any one of claims 1 to 6, **characterized in that**
the detection unit (20) is connected to a system control (40) in order to stop a manipulation process and/or to output a warning signal when the at least one work glove (14) is detected accessing a prohibited area of the manipulation chamber (12) and/or in order to set environmental operating parameters for a manual manipulation, the detection unit (20) preferably having a storage unit to log the detected access.

8. The insulator apparatus according to any one of claims 1 to 7, **characterized in that**
the detection unit (20) comprises at least one gateway (36) in order to be connected to at least one sensor element (17) of the sensor means (16) and a storage-programmable sensor control (38), several gateways (36) being connected to the sensor control (38) by means of a switch element (37).

9. A method for monitoring an insulator apparatus (10), in particular according to any one of claims 1 to 8, the insulator apparatus (10) having a manipulation chamber (12) with sensor means (16), an operator (50) accessing the manipulation chamber (12) with at least one work glove (14), in particular a long-sleeve glove, through at least one access opening (18) or the operator inserting the at least one work glove (14) into the access opening (18) to seal the manipulation chamber (12), the sensor means (16) being disposed at a distance to the access opening (18) in the manipulation chamber (12) and being connected to a detection unit (20), the method comprising the following steps:
- directing a detection area (22) of the sensor means (16), in particular of imaging sensor means, towards at least one operating area of the at least one work glove (14) in the area of the access opening (18), the sensor means (16) being formed as at least one radar sensor (24) and the at least one radar sensor (24) being disposed in the manipulation chamber (24) such that and/or a radar signal being generated, in particular by selecting a suitable wavelength, such that a radiation cone (30) of the radar sensor (24), in particular having at least one radar antenna and at least one transmitting antenna, covers at least the operating area of the work gloves (14) in the area of the access opening (18), and the radiation cone (30) of the at least one radar sensor (24) being directed towards at least two work gloves (14),
- detecting reflected sensor signals and evaluating the sensor signals by means of the detection unit (20), the radiation cone (30) being divided into at least a first and a second detection area (22a, 22b) for evaluation by means of the detection unit (20) using filter means in order to allocate reflected radar signals to individual work gloves (14),
- detecting an inserting and/or operating movement of the at least one work glove (14), in particular a speed or path change with respect to a reference position of the work glove (14) and/or with respect to an object-free detection of the operating area, and/or a deviation from a passive movement pattern, in particular a periodically oscillating movement pattern.

10. The method for monitoring an insulator apparatus (10) according to claim 9, a signal detected by the detection unit (20) being sent to a system control (40), preferably subsequently to a detection of the at least one work glove (14), in order to output a warning signal to the operator (50) and/or to stop or restrict further operation of the insulator apparatus (10) in the event of a manual access of the at least one work glove (14) into a prohibited area, in particular an automated machine process.

11. A computer program having program code means, said computer program being stored on a computer-readable data carrier in order to perform all steps of a method according to claim 9 or 10, when the computer program product is executed on a computer or on a corresponding computer unit, in particular a system control (40) and/or a detection unit (20), according to claim 1.

## Revendications

1. Dispositif isolateur (10), notamment pour une application pharmaceutique et/ou biotechnique, ledit dispositif isolateur (10) ayant un espace de manipulation (12), au moins un gant de travail (14) insérable dans l'espace de manipulation (12) et des moyens capteurs (16) pour détecter un état inséré de l'au moins un gant de travail (14), l'au moins un gant de travail (14) étant insérable de manière échangeable dans une ouverture d'introduction (18) de l'espace de manipulation (12) et étanchéifiant le dispositif isolateur (10) dans l'état inséré,
les moyens capteurs (16) étant disposés à distance de l'ouverture d'introduction (18) dans l'espace de manipulation (12) et étant connectés à une unité de détection (20), une zone de détection (22) des moyens capteurs (16) comprenant au moins une zone de travail de l'au moins un gant de travail (14) dans la zone de l'ouverture d'introduction (18), notamment une section transversale ayant le diamètre (D) de l'ouverture d'introduction (18), pour détecter au moins un remplacement et/ou un maniement de l'au moins un gant de travail (14) dans l'espace de manipulation (12) et les évaluer au moyen de l'unité de détection (20),
**caractérisé en ce que**
les moyens capteurs (16) sont réalisés comme au moins un capteur radar (24), notamment des données de capteur de mouvement variables dans le temps étant évaluables au moyen de l'unité de détection (20) pour détecter l'au moins un gant de travail (14), l'au moins un capteur radar (24) étant disposé de manière et/ou réalisé pour la génération d'un signal radar de manière qu'un angle d'ouverture (α) d'un cône de rayonnement (30) de l'au moins un capteur radar (24) couvre la zone de détection (22) pour détecter l'au moins un gant de travail (14), le cône de rayonnement (30) de l'au moins un capteur radar (24) étant orienté vers au moins deux gants de travail (14), l'unité de détection (20) ayant un moyen de filtrage pour diviser la détection en au moins une première et une deuxième zone de détection (22a, 22b) pour attribuer des signaux radar réfléchis à des gants de travail (14) individuels.

2. Dispositif isolateur selon la revendication 1,
**caractérisé en ce que**
l'unité de détection (20) a des moyens de filtrage, notamment basés sur un ordinateur ou un logiciel, qui sont réalisés pour limiter la zone de détection (22) et/ou pour régler une valeur de seuil pour détecter un mouvement, notamment pour filtrer des mouvements passifs en arrière-plan.

3. Dispositif isolateur selon la revendication 1 ou 2,
**caractérisé en ce que**
l'au moins un gant de travail (14) est réalisé comme gant à manche et la zone de détection (22) des moyens capteurs (16) est orientée au moins vers une section de manche du gant à manche.

4. Dispositif isolateur selon l'une quelconque des revendications 1 à 3, **caractérisé en ce que**
l'au moins un capteur radar (24) a au moins une antenne réceptrice et au moins une antenne émettrice, de préférence quatre antennes réceptrices et trois antennes émettrices, qui, de préférence, sont disposées sur une carte (26) de circuit imprimé, et le capteur radar (24) étant réalisé pour générer un signal radar dans une gamme de fréquences de préférentiellement 60 GHz à 80 GHz.

5. Dispositif isolateur selon l'une quelconque des revendications 1 à 4, **caractérisé en ce que**
le capteur radar (24) est réalisé comme au moins deux éléments capteurs (17) disposés, de préférence par paires, dans un boîtier (28) pour détecter plusieurs stations d'introduction (32) de l'espace de manipulation (12) et/ou pour détecter plusieurs gants de travail (14).

6. Dispositif isolateur selon l'une quelconque des revendications 1 à 5, **caractérisé en ce que**
l'au moins un capteur radar (24) est étanchéifié dans un boîtier (28), notamment un boîtier en acier inoxydable en deux parties, contre des influences de l'environnement, le boîtier ayant, de préférence, un élément de couverture (58), notamment un verre de protection, perméable à des faisceaux radar pour couvrir une section de détection (34) du capteur radar (24).

7. Dispositif isolateur selon l'une quelconque des revendications 1 à 6, **caractérisé en ce que**
l'unité de détection (20) est connectée à une commande de système (40) pour arrêter un processus de manipulation et/ou émettre un signal d'alarme lors d'une détection d'introduction de l'au moins un gant de travail (14) dans une zone interdite de l'espace de manipulation (12) et/ou pour régler des paramètres de fonctionnement de l'environnement pour une manipulation manuelle, l'unité de détection (20), de préférence, ayant une unité de mémoire pour consigner la détection d'introduction.

8. Dispositif isolateur selon l'une quelconque des revendications 1 à 7, **caractérisé en ce que**
l'unité de détection (20) comprend au moins une passerelle (36) pour être connectée à au moins un élément capteur (17) des moyens capteurs (16) et une commande de capteur (38) programmable à mémoire, plusieurs passerelles (36) étant connectées à la commande de capteur (38) au moyen d'un élément de commutation (37).

9. Procédé pour surveiller un dispositif isolateur (10), notamment selon l'une quelconque des revendications 1 à 8, ledit procédé ayant un espace de manipulation (12) ayant des moyens capteurs (16), un opérateur (50) introduisant la main dans l'espace de manipulation (12) au moyen d'au moins un gant de travail (14), notamment un gant à manche, au moins à travers une ouverture d'introduction (18) ou insérant l'au moins un gant de travail (14) dans l'ouverture d'introduction (18) pour étanchéifier l'espace de manipulation (12), les moyens capteurs (16) étant disposés à distance de l'ouverture d'introduction (18) dans l'espace de manipulation (12) et étant connectés à une unité de détection (20), le procédé comprenant les étapes suivantes :
- orienter une zone de détection (22) des moyens capteurs (16), notamment de moyens capteurs d'imagerie, au moins vers une zone de travail de l'au moins un gant de travail (14) dans la zone de l'ouverture (18), les moyens capteurs (16) étant réalisés comme au moins un capteur radar (24) et l'au moins un capteur radar (24) étant disposé dans l'espace de manipulation (24) de manière et/ou un signal radar étant généré, notamment en choisissant une longueur d'onde appropriée, de manière qu'un cône de rayonnement (30) du capteur radar (24), notamment ayant au moins une antenne radar et au moins une antenne émettrice, couvre au moins la zone de travail des gants de travail (14) dans la zone de l'ouverture d'introduction (18) et le cône de rayonnement (30) de l'au moins un capteur radar (24) étant orienté vers au moins deux gants de travail (14),
- détecter des signaux de capteur réfléchis et évaluer les signaux de capteur au moyen de l'unité de détection (20), le cône de rayonnement (30) étant divisé en une première et une deuxième zone de détection (22a, 22b) pour l'évaluation au moyen de l'unité de détection (20) avec des moyens de filtrage afin d'attribuer des signaux radar réfléchis à des gants de travail (14) individuels,
- détecter un mouvement d'insertion et/ou de maniement de l'au moins un gant de travail (14), notamment un changement de vitesse ou de trajet par rapport à une position de référence du gant de travail (14) et/ou d'une détection libre d'objets de la zone de travail, et/ou un écart d'un schéma de mouvement passif, notamment d'un schéma de mouvement oscillant périodiquement.

10. Procédé pour surveiller un dispositif isolateur (10) selon la revendication 9, dans lequel un signal détecté par l'unité de détection (20) est envié à une commande de système (40), de préférence ensuite à une détection de l'au moins un gant de travail (14), pour émettre un signal d'alarme à l'opérateur (50) et/ou pour arrêter ou restreindre une poursuite d'un fonctionnement du dispositif isolateur (10) lors d'une introduction manuelle de l'au moins un gant de travail (14) dans la zone interdite, notamment d'un processus de machine automatique.

11. Programme d'ordinateur ayant des moyens de code de programme, ledit programme d'ordinateur étant stocké sur un support de données lisible par ordinateur pour effectuer toutes les étapes d'un procédé selon la revendication 9 ou 10 lorsque le produit de programme d'ordinateur est exécuté sur un ordinateur ou sur une unité de calcul correspondante, notamment une commande de système (40) et/ou une unité de détection (20), selon la revendication 1.
